# EUROPEAN PATENT APPLICATION

(11) **EP 1 995 939 A1**
(43) Date of publication of application: **26.11.2008**
(21) Application number: 07713568.9
(22) Date of filing: 08.03.2007
(51) Int. Cl.: H04M 1/02, H04M 1/00, H04Q 7/38

(54) **MOBILE TELEPHONE**

(30) Priority: 10.03.2006 JP 2006066508
(71) Applicant: NEC Corporation, Minato-ku Tokyo 108-8001 (JP)
(72) Inventor: YAMADA, Hiroshi, Tokyo 108-8001 (JP)
(74) Representative: Wenzel & Kalkoff
(86) International application number: PCT/JP2007/000186
(87) International publication number: WO 2007/105369

(57) **Abstract**

Herein disclosed is a mobile phone capable of receiving TV broadcasting, including a first housing having a display unit on a front face thereof and a sub-display unit on a back face thereof, and a second housing having an operation unit on a surface thereof, the first housing and the second housing being coupled via a biaxial hinge, and the mobile phone can be off-hooked for starting the phone communication merely by detection of a change in housing form upon detection of an incoming call, from a TV viewing form in a portrait or landscape orientation in a folded state, a TV viewing form in the landscape orientation with the first housing being inclined by 90 degrees, a TV viewing form in a control information display mode, and a TV viewing form in the phone communication mode.

## Description

### TECHNICAL FIELD

The present invention relates to a mobile phone with a digital TV (DTV) viewing function that can be switched, upon notice of receipt of a call while viewing TV, to a phone communication mode by a simple manipulation.

### BACKGROUND ART

In recent years, mobile phones with a TV viewing function have been developed and put to practical use. Regarding such mobile phones, various proposals have been made for improving performance related to the TV viewing, as well as for securing, at the same time, the functions required for phone communication.

For example, a mobile phone having a biaxial hinge structure has been developed, which includes a first housing made rotatable about a first hinge attached to a lower end portion thereof, and in which the first hinge is fixed to a second hinge via a rotation shaft orthogonally oriented with respect to the first hinge, and the second hinge is rotatably attached to an upper end portion of a second housing so as to allow changing of the orientation of the rotation shaft thereby achieving a rotatable and pivotable structure, and thus enabling extensive variation of the coupling posture of the first housing and the second housing according to the function to be utilized. such a conventional mobile phone of the biaxial hinge structure is built up such that, during an off-time, the first housing is folded over the second housing; during phone communication, the first housing is opened by rotating the first hinge but without rotating the second hinge, so as to expose an operation unit provided on the second housing and to orient forward a display unit provided on the surface of the first housing for displaying information such as letters; and when control information is to be set, a sub-display unit provided on the back surface of the first housing for displaying the control information is oriented forward. For viewing TV, a first posture is assumed in which the display unit provided on the first housing is exposed with the first housing being folded to close, to thereby display the TV image, otherwise the first housing is rotated by 90 degrees in the opened state so that the display unit provided on the first housing and the operation unit provided on the second housing are exposed, to thereby display the TV image.

Then, when an incoming call is received while viewing TV, a call receipt button on the mobile phone is manipulated so as to off-hook, thus starting the communication. However in the case of the first posture, a voice transmitter provided on the second housing may be hidden under the folded housing, or a voice receiver may by located in a position inappropriate for the phone communication, which impedes starting the phone communication under such circumstances. This leads to the inconvenience that the phone communication cannot be started until the housing is opened so as to switch to the phone communication mode and to off-hook. In the case of the second posture also, inconvenience is incurred in that when an incoming call is received while viewing TV it is necessary to manipulate the call receipt button to thereby off-hook, and to rotate the first housing by 90 degrees to restore the posture for phone communication, before starting the phone communication.

Regarding such inconvenience, a patent document 1 discloses a folding-type mobile phone that displays the TV image on a second display unit on the back surface of the cover with the mobile phone being folded and the TV switch turned on, but that can be switched, upon receipt of an incoming call while the TV image is displayed, to the phone communication mode by opening the mobile phone and turning off the TV switch.

Thus, the mobile phone according to the patent document 1 also has the inconvenience, as the foregoing conventional art, that the housing has to be opened and the TV switch has to be turned off before starting the phone communication, when an incoming call is received while viewing TV with the mobile phone being folded.

A patent document 2 discloses a mobile phone that can be set, in the aspect of a sliding type, in a closed state where a sliding action of the first housing with the display unit and a TV key is not made with respect to the second housing provided with a phone key, under which the TV image can be displayed on the display unit for TV viewing upon manipulating the TV key so as to turn on the TV function, and that the first housing is caused to slide with respect to the second housing to thereby enter an open state, under which the phone communication can be started upon manipulating the phone key (for example, on-hook key) to thereby turn on the phone function.

Also, regarding a rotating type, a mobile phone is disclosed that can be set in a closed state where the first housing with the display unit and the TV key is inclined by 90 degrees with respect to the second housing with the phone key, under which, as the sliding type mobile phone, the TV image can be displayed on the display unit for TV viewing upon manipulating the TV key so as to turn on the TV function, and that can be set in the open state where the first housing is not inclined with respect to the second housing, under which the phone communication can be started, as the sliding type mobile phone, upon manipulating the phone key to thereby turn on the phone function.

The mobile phone according to the patent document 2, however, similarly has the inconvenience, as the foregoing conventional art, in that the posture of the housing has to be shifted to the open state and the phone key has to be manipulated before starting the phone communication, for transition to the phone communication mode while viewing TV under the closed state, and in that the first housing has to be reversely rotated by 90 degrees to enter the phone communication mode and the phone key has to be manipulated before starting the phone communication, for transition to the phone communication mode while viewing TV under the open state where the first housing is inclined by 90 degrees.

Further, a patent document 3 discloses a mobile phone with a composite stereo receiving function for reproduction through a headphone. With such mobile phone, a stereo sound can be reproduced through the headphone based on an output of an audio reproduction unit, under a non-phone communication mode. The disclosed technique includes disconnecting, once an incoming call is received in this mode, the output of the stereo sound and providing a ringer signal to the headphone, and stopping the audio reproduction unit by manipulation of an incoming call key and processing the incoming call, thereby providing the sound of the calling party to the headphone in monaural sound.

The patent document 3 merely discloses, however, the technique of reproducing the stereo sound through the headphone in the audio reproduction mode as well as providing the monaural sound through the headphone when the audio reproduction unit is stopped, and includes no reference to switching between the TV viewing function and the phone communication function in the mobile phone.
[Patent document 1] JP-A No.2005-109819
[Patent document 2] JP-A No.2005-136457
[Patent document 3] JP-A No.H04-243358

### DISCLOSURE OF THE INVENTION

### [PROBLEM TO BE SOLVED BY THE INVENTION]

Conventional mobile phones have the drawback that switching from the TV viewing mode to the phone communication mode requires changing the posture of the housing and performing manipulation of a certain switch, which is troublesome.

The present invention has been achieved in view of the foregoing situation, and provides a mobile phone that allows the user of the mobile phone to switch from the TV viewing mode to the phone communication mode with simplified manipulation.

### [MEANS FOR SOLVING PROBLEM]

According to the present invention, there is provided a mobile phone capable of receiving TV broadcasting, including a first housing having a display unit on a front face thereof and a sub-display unit on a back face thereof, and a second housing having an operation unit on a surface thereof and coupled to the first housing via a biaxial hinge, wherein a TV viewing mode can be switched to a phone communication mode merely by a single manipulation of a user, upon receipt of an incoming call in the TV viewing mode.

The mobile phone according to the present invention may comprise a housing form detection unit that detects a mutual coupling posture of the first housing and the second housing, to thereby detect the single manipulation of the user based on a change of the mutual coupling posture of the first housing and the second housing detected by the housing form detection unit.

In the mobile phone according to the present invention, the single manipulation of the user may include changing the mutual coupling posture of the first housing and the second housing, upon receipt of an incoming call while viewing TV in a TV viewing form in which a TV image is displayed on the display unit with the mobile phone being folded such that the display unit on the first housing is oriented forward, from such TV viewing form to a phone communication form in which the mobile phone is opened such that the display unit on the first housing is oriented forward and the operation unit is exposed on the surface of the second housing, to thereby off-hook,thus enabling starting phone communication.

Also, in the mobile phone according to the present invention, the single manipulation of the user may include changing the mutual coupling posture of the first housing and the second housing, upon receipt of an incoming call while viewing TV in a TV viewing form in which the TV image is displayed on the display unit with the first housing being inclined by 90 degrees with respect to the second housing from the phone communication form in which the mobile phone is opened such that the display unit on the first housing is oriented forward and the operation unit is exposed on the surface of the second housing, from such TV viewing form to the phone communication form by rotating the first housing by 90 degrees with respect to the second housing, to thereby off-hook,thus enabling starting phone communication.

Also, in the mobile phone according to the present invention, the single manipulation of the user may include changing the mutual coupling posture of the first housing and the second housing, upon receipt of an incoming call while viewing TV in the TV viewing form in which the TV image is displayed on the sub-display unit with the mobile phone being opened such that the sub-display unit on the first housing is oriented forward and the operation unit is exposed on the surface of the second housing,thus assuming a control information display form, from such TV viewing form to the phone communication form by rotating the first housing by 180 degrees with respect to the second housing, to thereby off-hook, thus enabling starting phone communication.

Further, in the mobile phone according to the present invention, the single manipulation of the user may include pressing a call receipt key provided on the operation unit, to thereby off-hook,thus enabling starting phone communication, upon receipt of an incoming call while viewing TV, with the TV image being displayed on the display unit in the phone communication form in which the mobile phone is opened such that the display unit on the first housing is oriented forward and the operation unit is exposed on the surface of the second housing.

Further, the mobile phone according to the present invention, being configured to accept connection of a headphone that outputs received sound and includes a microphone for inputting sound to be transmitted and a call receipt button that sets the mobile phone in the phone communication mode, may comprise a detector that detects whether the headphone is connected, so as to allow, under a state that the headphone is detected to be connected, switching from the TV viewing mode to the phone communication mode only by a single manipulation of the user, upon receipt of an incoming call while viewing TV.

Still further, in the mobile phone according to the present invention, the single manipulation of the user may include pressing the call receipt button to thereby off-hook,thus enabling starting phone communication, upon receipt of an incoming call while viewing TV displaying the TV image on the display unit with the mobile phone being folded such that the display unit on the first housing is oriented forward.

Still further, in the mobile phone according to the present invention, the single manipulation of the user may include pressing the call receipt button or the call receipt key provided on the operation unit, to thereby off-hook,thus enabling starting phone communication, upon receipt of an incoming call while viewing TV displaying the TV image on the display unit with the first housing being inclined by 90 degrees with respect to the second housing, from the phone communication form in which the mobile phone is opened such that the display unit on the first housing is oriented forward and the operation unit is exposed on the surface of the second housing.

Still further, in the mobile phone according to the present invention, the single manipulation of the user may include pressing the call receipt button or the call receipt key provided on the operation unit, to thereby off-hook, thus enabling starting phone communication, upon receipt of an incoming call while viewing TV displaying the TV image on the sub-display unit in the control information display form in which the mobile phone is opened such that the sub-display unit on the first housing is oriented forward and the operation unit is exposed on the surface of the second housing.

Still further, in the mobile phone according to the present invention, the single manipulation of the user may include pressing the call receipt button or the call receipt key provided on the operation unit, to thereby off-hook,thus enabling starting phone communication, upon receipt of an incoming call while viewing TV displaying the TV image on the display unit in the phone communication form in which the mobile phone is opened such that the display unit on the first housing is oriented forward and the operation unit is exposed on the surface of the second housing.

Still further, the mobile phone according to the present invention, being configured to accept connection of a headphone that outputs received sound and includes a microphone for inputting sound to be transmitted and a call receipt button that sets the mobile phone in the phone communication mode, may comprise a detector that detects whether the headphone is connected, so as to allow, under a state that the headphone is not detected to be connected, switching from the TV viewing mode to the phone communication mode only by a single manipulation of the user, upon receipt of an incoming call while viewing TV.

### [ADVANTAGE OF THE INVENTION]

The mobile phone thus constructed allows switching from the TV viewing mode to the phone communication mode merely by a single manipulation, thereby simplifying the switching process from the TV viewing mode to the phone communication mode.

### BRIEF DESCRIPTION OF THE DRAWINGS

The above and other objects, features and advantages will become more apparent through the following description of preferred embodiments and the accompanying drawings.
Fig. 1 is a block diagram showing a circuit configuration of a mobile phone according to a first embodiment of the present invention;
Fig. 2 includes schematic views showing a phone communication form and a control information display form of the mobile phone according to the first embodiment;
Fig. 3 includes schematic views showing an off-time form of the mobile phone according to the first embodiment;
Fig. 4 includes schematic views showing a TV viewing form with a biaxial hinge being set in a first posture;
Fig. 5 is a schematic view showing a TV viewing form with the biaxial hinge being set in a second posture; and
Fig. 6 is a schematic view showing a TV viewing form according to a second embodiment of the present invention.

### BEST MODE FOR CARRYING OUT THE INVENTION

In a mobile phone capable of receiving TV broadcasting, and including a first housing 31 having a display unit 20 on a front face thereof and a sub-display unit 21 on a back face thereof, and a second housing 32 having an operation unit 23 on a surface thereof, the first housing 31 and the second housing 32 being coupled via a biaxial hinge, a TV viewing mode can be switched to a phone communication mode merely by a single manipulation of a user, upon receipt of an incoming call in the TV viewing mode.

### [First embodiment]

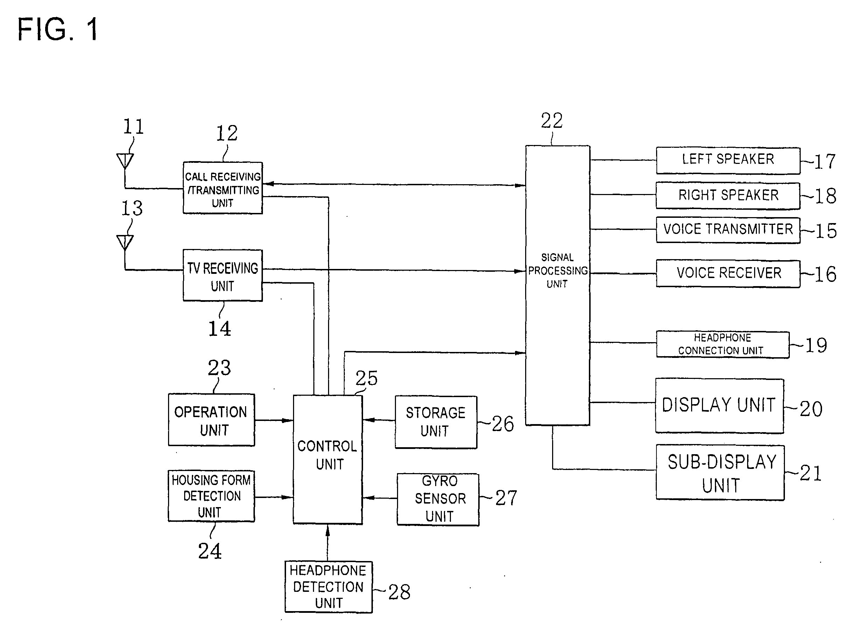

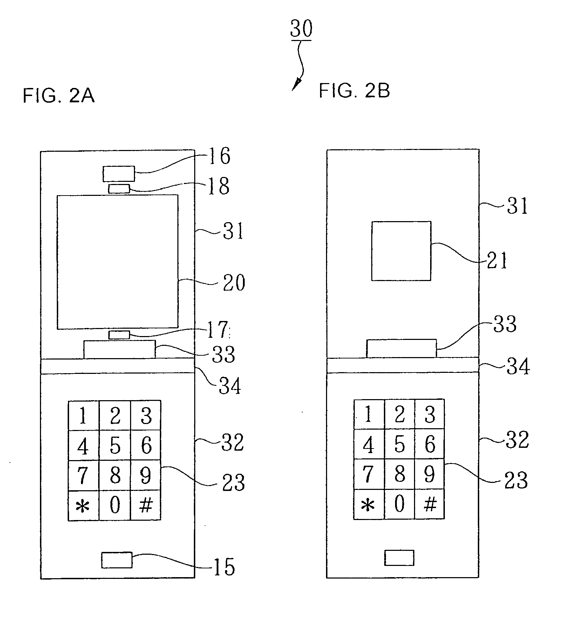

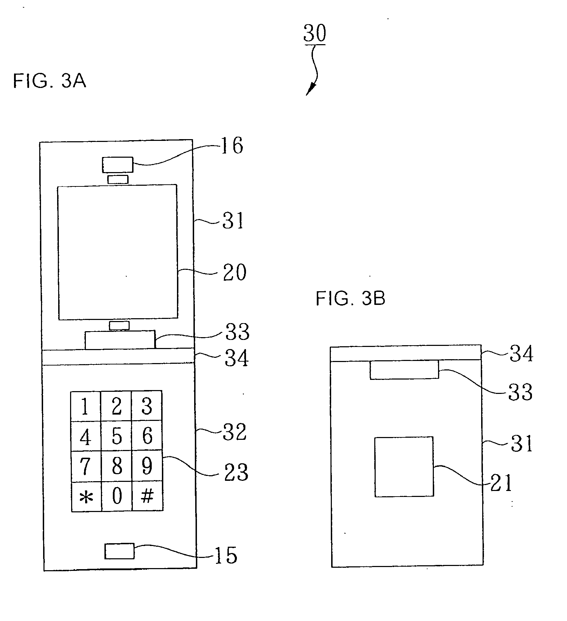

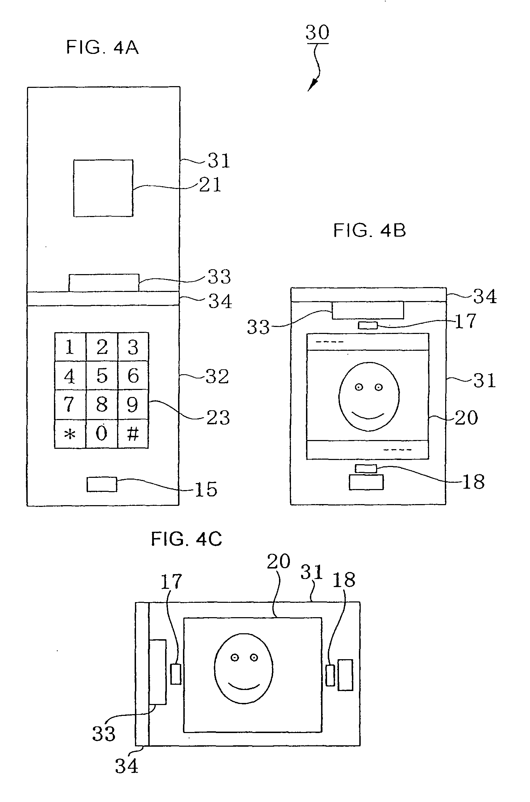

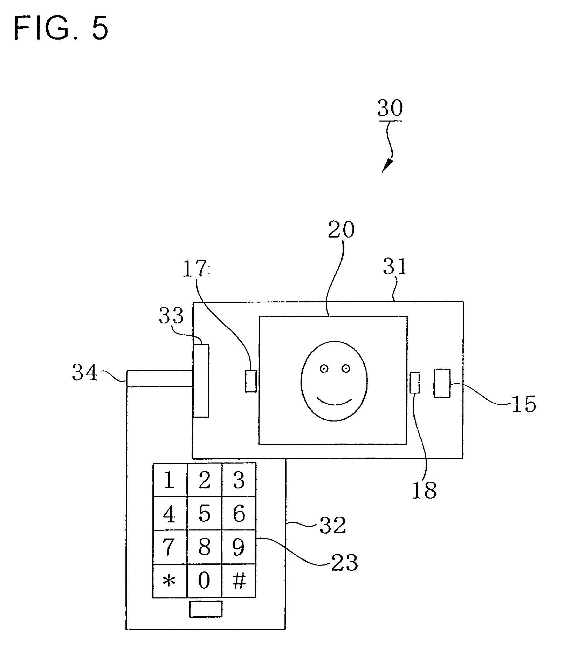

Fig. 1 is a block diagram showing a circuit configuration of a mobile phone according to this embodiment; Fig. 2 includes schematic views showing a phone communication form and a control information display form of the mobile phone according to this embodiment; Fig. 3 includes schematic views showing an off-time form of the mobile phone according to this embodiment; Fig. 4 includes schematic views showing a TV viewing form with the biaxial hinge being set in a first posture; and Fig. 5 is a schematic view showing the TV viewing form with the biaxial hinge being set in a second posture.

The mobile phone according to this embodiment generally includes, as shown in Fig. 1, a call receiving/transmitting antenna 11, a call receiving/transmitting unit 12, a TV receiving antenna 13, a TV receiving unit 14, a voice transmitter 15, a voice receiver 16, a left speaker 17, a right speaker 18, a headphone connection unit 19, a display unit 20, a sub-display unit 21, a signal processing unit 22, an operation unit 23, a housing form detection unit 24, a control unit 25, and a storage unit 26, with the addition of a gyro sensor unit 27 and a headphone detection unit 28 if need be.

The call receiving/transmitting antenna 11 receives and transmits a wireless signal for phone communication. The call receiving/transmitting unit 12 converts an audio signal input thereto for transmission and a data signal into a wireless signal and provides such signals to the call receiving/transmitting antenna 11, and also converts a wireless signal from the call receiving/transmitting antenna 11 into a monaural audio signal or a data signal and provides such signals to the signal processing unit 22. The TV receiving antenna 13 receives a digital TV (hereinafter simply referred to as TV) broadcasting signal such as a digital terrestrial broadcasting. The TV receiving unit 14 converts a TV broadcasting signal from the TV receiving antenna 13 into a stereo audio signal and an image signal, and outputs such signals to the signal processing unit 22.

The voice transmitter 15 converts sound into a transmission audio signal and outputs the same. The voice receiver 16 converts a received audio signal into sound and outputs the same. The left speaker 17 outputs a left (L) component of the stereo audio signal. The right speaker 18 outputs a right (R) component of the stereo audio signal. The headphone connection unit accepts connection of a headphone, and provides, under the connected state, the left component of the stereo audio signal to the left (L) piece of the headphone, and the right component to the right (R) piece. The display unit 20 displays letter information during phone communication, and a TV image signal when receiving the TV broadcasting. The sub-display unit 21 displays a content of control information of the mobile phone, in a setting process and in actual use. The signal processing unit 22 executes input/output processing of the audio signal and image signal between the call receiving/transmitting unit 12 and TV receiving unit 14, and the voice transmitter 15, voice receiver 16, left speaker 17, right speaker 18, headphone connection unit 19, display unit 20, and sub-display unit 21.

The operation unit 23 inputs operation information of the user in the phone communication mode and the TV receiving mode. The housing form detection unit 24 detects a mutual coupling posture (form) of the first housing and the second housing of the biaxial hinge type mobile phone, with a proximity switch (not shown) or the like. The control unit 25 controls the action of the call receiving/transmitting unit 12 and the TV receiving unit 14 according to operation information from the operation unit 23 and the detection information of the housing form from the housing form detection unit 24, as well as controls the input/output of various signals in the signal processing unit 22. The storage unit 26 stores programs necessary for operating the control unit 25, so as to provide the program to the control unit 25 as the case may be, and temporarily stores the data of the units under operation. The gyro sensor unit 27 detects whether the mobile phone 30 is vertically oriented so that the display unit 20 is vertically oriented, or horizontally oriented so that the display unit 20 is horizontally oriented. The headphone detection unit 28 detects whether the headphone is connected to the mobile phone 30.

Hereunder, various forms that the mobile phone having the biaxial hinge structure can assume, as well as operational functions in the respective forms will be described. The biaxial hinge can assume two types of postures, each of which will be described separately.

### [First posture of the biaxial hinge]

The first posture of the biaxial hinge is a state that a second hinge is laid down, and the mobile phone 30 is set such that the first housing 31 having the display unit 20 on the front face thereof and the second housing 32 having the operation unit 23 on the front face thereof are coupled so as to open and close in a forward and backward direction via a first hinge 33, and the first housing 31 is pivotally coupled to a rotation shaft (not shown) oriented in parallel to the plane of the second housing 32.

Referring first to Fig. 2, description will be made on a phone communication form of the mobile phone 30, as well as on operation for transition therefrom to a control information display form, and for off-hooking, thus enabling the phone communication upon receipt of an incoming call while viewing TV in the phone communication form and the control information display form.

Fig. 2(a) depicts the phone communication form of the mobile phone 30, in which the first housing 31 is opened from the second housing 32, such that the display unit 20 and the voice receiver 16 of the first housing 31 are oriented forward and the operation unit 23 and the voice transmitter 15 of the second housing 32 are exposed, so that all those units confront the user, similarly to a form of use of a conventional folding type mobile phone.

The housing form detection unit 24 detects that the first housing 31 is opened from the second housing 32 so as to assume the phone communication form shown in Fig. 2(a), for example with a proximity switch (not shown) provided at a lower end portion of the first hinge 33 and a proximity switch (not shown) provided at an upper end portion of the second hinge 34. In this case the control unit 25 activates the call receiving/transmitting unit 12 according to the detection result of the phone communication form, and controls the signal processing unit 22 to enter the phone communication mode, thereby enabling executing communication by phone through the mobile phone 30.

Thus, the mobile phone according to this embodiment allows executing the phone communication upon opening the first housing 31 from the second housing 32 to achieve the form shown in Fig. 2(a).

Also, operating the operation unit 23 in the foregoing form to cause the control unit 25 to control the TV receiving unit 14 and the signal processing unit 22 enables displaying the TV image on the display unit 20 and outputting monaural sound from the left speaker 17 and/or the right speaker 18, thus viewing TV.

When an incoming call is received while viewing TV in the form shown in Fig. 2(a), simply pressing, for example, a call receipt key (not shown) provided on the operation unit 23 causes the control unit 25 to off-hook,thus enabling the phone communication, based on the TV reception detection result in the TV receiving unit 14 and the incoming call detection result in the call receiving/transmitting unit 12, without changing the form of the housing (i.e. without depending on the housing form detection result).

Thus, the mobile phone according to this embodiment allows off-hooking,thus enabling the phone communication merely by a single operation of pressing the call receipt key, upon receipt of an incoming call while viewing TV in the phone communication form.

Fig. 2(b) depicts the control information display form of the mobile phone 30, in which the first housing 31 is rotated by 180 degrees about the rotation shaft from the state shown in Fig. 2(a), such that the sub-display unit 21 is oriented forward on the first housing 31 while the state of the second housing 32 remains unchanged, so that the sub-display unit 21 and the second housing 32 both confront the user, similarly to a control information display form of a conventional folding type mobile phone.

The housing form detection unit 24 detects that the first housing 31 is opened from the second housing 32 in the control information display form shown in Fig. 2(b), for example with the proximity switch (not shown) provided at a lower end portion of the first hinge 33 and the proximity switch (not shown) provided at an upper end portion of the second hinge 34. The control unit 25 controls the operation unit 23 and the signal processing unit 22 to enter the control information display mode according to the detection result of the control information display form, thereby enabling setting and modifying the control information from the operation unit 23 in the mobile phone 30.

Thus, the mobile phone according to this embodiment allows switching from the function of the phone communication mode to the function of the control information display mode, merely by changing the housing form for the phone communication to the housing form for the control information display.

Also, operating the operation unit 23 in the foregoing form to cause the control unit 25 to control the TV receiving unit 14 and the signal processing unit 22 enables displaying the TV image on the sub-display unit 21 and outputting monaural sound from the left speaker 17 and/or the right speaker 18 on the first housing, thus viewing TV.

When an incoming call is received while viewing TV in the form shown in Fig. 2(b), simply rotating the first housing 31 by 180 degrees about the rotation shaft, thus achieving the form shown in Fig. 2(a),causes the control unit 25 to off-hook,thus enabling the phone communication, according to the incoming call detection result through the call receiving/transmitting unit 12 and the TV reception detection result in the TV receiving unit 14, and based on the detection result that the first housing 31 has been changed to the phone communication form provided by the housing form detection unit 24.

Thus, the mobile phone according to this embodiment allows off-hooking,thus enabling starting the phone communication merely by a single operation of changing the housing form, upon receipt of an incoming call while viewing TV in the control information display form.

Referring now to Fig. 3, description will be made on the operation for the transition from the phone communication form to an off-time form of the mobile phone 30, and for off-hooking ,thus enabling the phone communication upon receipt of an incoming call while viewing TV in the off-time form.

Fig. 3(a) depicts, as described referring to Fig. 2(a), the phone communication form of the mobile phone 30. Rotating the first housing 31 by 180 degrees about the first hinge 33 from the state shown in Fig. 3(a) causes the first housing 31 to be folded over the second housing with the sub-display unit 21 being oriented forward, so that the mobile phone 30 assumes the off-time form as shown in Fig. 3(b). In this case, the display unit 30 and the voice receiver 16 on the first housing 31, as well as the operation unit 23 and the voice transmitter 15 on the first housing 32 are all hidden inside, thereby achieving a form appropriate for the off-time.

The housing form detection unit 24 detects that the first housing 31 and the second housing 32 are in the off-time form shown in Fig. 3(b), for example with a proximity switch (not shown) provided on the front face of the first housing 31 (where the display unit 20 is located) and a proximity switch (not shown) provided on the front face of the second housing 32. In this case, the control unit 25 controls the call receiving/transmitting unit 12 and the signal processing unit 22 according to the setting made by the user through the operation unit 23, to thereby allow deciding in advance whether to set the mobile phone 30 in a stand-by mode for an incoming call or an off state, in the off-time form.

Thus, the mobile phone according to this embodiment allows switching from the function of the phone communication mode to the stand-by state for an incoming call or an off state in the off-time form, merely by changing the housing form of the phone communication mode to the housing form of the off-time form.

Referring now to Fig. 4, description will be made on the operation for the transition from the phone communication form to the TV viewing form of the mobile phone 30 with the housings being folded, and for off-hooking,thus enabling the phone communication upon receipt of an incoming call while viewing TV with the housings being folded.

Fig. 4(a) depicts, as described referring to Fig. 2(b), the control information display form of the mobile phone 30. Rotating the first housing 31 by 180 degrees about the first hinge 33 from the state shown in Fig. 4(a) causes the first housing 31 to be folded over the second housing with the display unit 20 being oriented forward, so that the mobile phone 30 assumes the TV viewing form as shown in Fig. 4(b). In this case, the display unit 20 of the first housing 31 is exposed on the outer face, similarly to a TV viewing form of a conventional sliding type mobile phone.

It is to be noted that, in this case, the mobile phone 30 may be switched once from the phone communication form shown in Fig. 2 to the control information display form, and then from the control information display form to the TV viewing form as shown in Fig. 4, instead of switching the mobile phone 30 from the control information display form to the TV viewing form.

The housing form detection unit 24 detects that the first housing 31 and the second housing 32 are closed in the TV viewing form shown in Fig. 4(b), for example with a proximity switch (not shown) provided on the back face of the first housing 31 (where the sub-display unit 21 is located) and the proximity switch (not shown) provided on the front face of the second housing 32. In this case, the control unit 25 controls the TV receiving unit 14 and the signal processing unit 22 to enter the TV viewing mode according to the detection result of the TV viewing form, to thereby allow the mobile phone 30 to display the TV image on the display unit 20, and to output monaural TV sound from one or both of the left speaker 33 and the right speaker 18 on the first housing, thus viewing TV.

In this case, providing the gyro sensor unit 27 that can detect whether the mobile phone 30 is oriented such that the major axis of the display unit 20 is vertically or horizontally oriented allows the control unit 25 to control the signal processing unit 22, so as to display the TV image in a portrait type screen as shown in Fig. 4(b) when the mobile phone 30 is vertically oriented such that the display unit 20 is vertically oriented (or close thereto) as a result of the detection by the gyro sensor unit 27, and in a landscape type screen as shown in Fig. 4(c) when the mobile phone 30 is horizontally oriented such that the display unit 20 is horizontally oriented (or close thereto) as a result of the detection by the gyro sensor unit 27, thereby allowing the display unit 20 to assume the portrait or landscape orientation for displaying the TV image, according to the holding direction of the user.

Further, in the case of the portrait type screen shown in Fig. 4(b), control unit 25 can create a display indicating receipt of an incoming call detected by activating the call receiving/transmitting unit 12, or a display of other control information, in a blank region on the screen other than the TV image.

When an incoming call is received while viewing TV in the state shown in Fig. 4(b) or 4(c), rotating the first housing 31 by 180 degrees about the first hinge 33 to achieve the form shown in Fig. 4(a), and then rotating the first housing 31 by 180 degrees about the rotation shaft causes the control unit 25 to detect, through the housing form detection unit 24, that the first housing 31 has been changed from the TV viewing form to the phone communication form, according to the incoming call detection result through the call receiving/transmitting unit 12 and the TV reception detection result in the TV receiving unit 14.

Thus, the mobile phone according to this embodiment allows off-hooking,thus enabling starting the phone communication merely by changing the housing form to the phone communication form, upon receipt of an incoming call while viewing TV in the TV viewing form in which the housings are closed.

### [Second posture of the biaxial hinge]

Fig. 5 depicts the TV viewing form with the biaxial hinge being set in a second posture.

The first posture of the biaxial hinge is a state that the second hinge 34 is erected, and the mobile phone 30 is set such that the first housing 31 having the display unit 20 on the front face thereof is coupled to the second housing 32 having the operation unit 23 so as to rotate in a forward and backward direction via the first hinge 33, and so as to pivot along the plane of the second housing 32 via the rotation shaft (not shown) vertically fixed with respect to the second housing 32.

In this case, the mobile phone 30 can assume the off-time form similar to Fig. 3(b) upon folding the first housing 31 about the first hinge 33 over the second housing 32 with the display unit 20 and the voice receiver 16 being oriented inward, from the open phone communication form similar to Fig. 3(a). Likewise, the mobile phone 30 can assume the control information display form similar to Fig. 2(b) upon rotating the first housing 31 by 180 degrees,thus to open it, afteronce folding into the off-time form from the phone communication form similar to Fig. 2(a).

The housing form in the foregoing cases can be detected by the housing form detection unit 24, as in the case of the first posture of the biaxial hinge. Also, the phone communication mode, the control information display mode and the off-time mode can be set based on the detection result of the housing form, as in the case of the first posture of the biaxial hinge.

Referring to Fig. 5, the transition of the mobile phone 30 to the phone communication form by a single operation upon receipt of an incoming call in the TV viewing form will be described hereunder.

Fig. 5 depicts the TV viewing form of the mobile phone 30. In this case, turning the first housing 31 by 90 degrees about the rotation shaft from the form of the mobile phone in the phone communication mode shown in Fig. 2(a) or 3(a), to thereby incline the first housing 31 with the display unit 20 being oriented forward and orthogonally with respect to the upper edge of the second housing 32, the display unit 20 of the first housing 31 appears on the front face and the operation unit 23 on the second housing 32 is operably exposed in the same plane, similarly to a TV viewing form of a conventional turning type mobile phone.

In such a state, the housing form detection unit 24 detects the mutual posture of the first housing 31 and the second housing 32, so that the control unit 25 activates the TV receiving unit 14 and controls the signal processing unit 22, so as to achieve the TV viewing mode of displaying the TV image on the display unit 20 in the landscape orientation, and outputting stereo sound from the left speaker 17 and the right speaker 18. Also, when an incoming call is detected in the call receiving/transmitting unit 12 in such a state, the control unit 25 may create a predetermined display announcing the receipt of the incoming call, on the TV screen.

Thus, modifying the mobile phone 30 from the phone communication form to the form shown in Fig. 5 allows switching from the phone communication mode to the TV viewing mode.

When an incoming call is received while viewing TV in the form shown in Fig. 5, turning the first housing 31 by 90 degrees about the rotation shaft to achieve the form shown in Fig. 2(a) or 3(a) causes the control unit 25 to off-hook, thus enabling the phone communication, according to the incoming call detection result through the call receiving/transmitting unit 12 and the TV reception detection result in the TV receiving unit 14, and based on the detection result that the first housing 31 has been changed to the phone communication form provided by the housing form detection unit 24.

Thus, in the case of the second posture of the biaxial hinge, a single operation of changing the TV viewing form in which the first housing 31 is inclined by 90 degrees in the landscape orientation to the phone communication form can off-hook, thus enabling starting the phone communication, upon receipt of an incoming call while viewing TV.

Also, as in the case of the first posture of the biaxial hinge, in the TV viewing form in which the housings are folded either in the portrait or landscape orientation or in the TV viewing form in the control information display mode, a single operation of changing the housing shape based on the detection of the incoming call can off-hook,thus enabling starting the phone communication, and in the TV viewing form in the phone communication mode, a single operation of pressing the call receipt key can off-hook,thus enabling starting the phone communication.

### [Second embodiment]

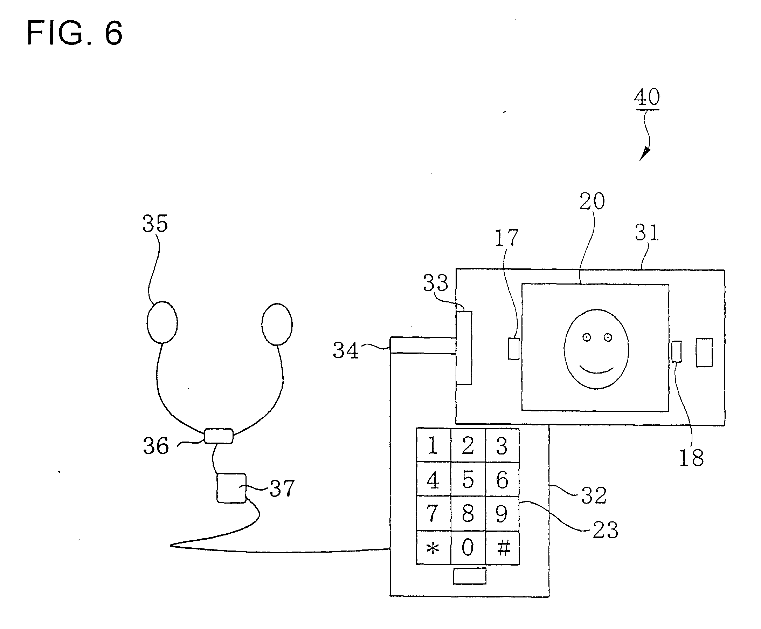

Fig. 6 is a schematic view showing a TV viewing form according to a second embodiment of the present invention.

In this embodiment, a mobile phone 40 includes, based on the structure according to the foregoing embodiment, a stereo headphone 35 and a microphone 36 provided on the headphone 35 as shown in Fig. 6, instead of the left speaker 17, the right speaker 18, and the voice transmitter 15, or in addition to the left speaker 17, the right speaker 18, and the voice transmitter 15. When the headphone 35 and the microphone 36 are in use, the left speaker 17, the right speaker 18 and the voice transmitter 15 are set inoperative. Further, the headphone 35 includes a call receipt button 37 for off-hooking the mobile phone 40 upon receipt of an incoming call. In addition, in the mobile phone according to this embodiment, the control unit 25 includes a headphone detection unit 28, based on the circuit configuration shown in Fig. 1.

Referring now to Fig. 6, description will be made on the operation to off-hook,thus enabling starting the phone communication in the mobile phone 40 from the TV viewing form in the portrait or landscape orientation in the folded state, the TV viewing form in the landscape orientation with the first housing 31 being inclined by 90 degrees, the TV viewing form in the control information display mode, and the TV viewing form in the phone communication mode, according to the detection result of an incoming call.

When an incoming call is received while viewing TV in the TV viewing form in the portrait orientation in the folded state similar to Fig. 4(b), or in the TV viewing form in the landscape orientation in the folded state similar to Fig. 4(c), the control unit 25 detects through the headphone detection unit 28 whether the headphone is connected, and in the case where the headphone 35 is connected, the mobile phone can be off-hooked for starting the phone communication by a press of the call receipt button 37 of the headphone 35. In the case where the headphone 35 is not connected, the mobile phone can be off-hooked for starting the phone communication once the housing form detection unit 24 detects that the mobile phone 40 has been modified to the phone communication form similar to Fig. 2(a) or 3(a).

When an incoming call is received while viewing TV in the TV viewing form in the landscape orientation in which the first housing 31 is inclined by 90 degrees as shown in Fig. 6, the control unit 25 detects through the headphone detection unit 28 whether the headphone is connected, and in the case where the headphone 44 is connected, the mobile phone can be off-hooked for starting the phone communication by a press of the call receipt key on the operation unit 23 or the call receipt button 37 of the headphone 35. In the case where the headphone 35 is not connected, the mobile phone can be off-hooked for starting the phone communication once the housing form detection unit 24 detects that the mobile phone 40 has been modified to the phone communication form similar to Fig. 2(a) or 3(a).

When an incoming call is received while viewing TV in the TV viewing form in the control information display mode similar to Fig. 2(b), the control unit 25 detects through the headphone detection unit 28 whether the headphone is connected, and in the case where the headphone 35 is connected, the mobile phone can be off-hooked for starting the phone communication by a press of the call receipt key on the operation unit 23 or the call receipt button 37 of the headphone 35. In the case where the headphone 35 is not connected, the mobile phone can be off-hooked for starting the phone communication once the housing form detection unit 24 detects that the mobile phone 40 has been modified to the phone communication form similar to Fig. 2(a) or 3(a).

When an incoming call is received while viewing TV in the TV viewing form in the phone communication mode similar to Fig. 2(a) or 3(a), the control unit 25 detects through the headphone detection unit 28 whether the headphone is connected, and in the case where the headphone 35 is connected, the mobile phone can be off-hooked for starting the phone communication by a press of the call receipt key on the operation unit 23 or the call receipt button 37 of the headphone 35. In the case where the headphone 35 is not connected, the mobile phone can be off-hooked for starting the phone communication by a press of the call receipt key on the operation unit 23.

Thus, according to this embodiment, when the headphone is in use in the mobile phone 40, the mobile phone can be off-hooked for starting the phone communication merely by a single operation of pressing the call receipt key on the operation unit 23 or the call receipt button 37 of the headphone 35, upon detection of an incoming call, from the TV viewing form in the portrait or landscape orientation in the folded state, the TV viewing form in the landscape orientation with the first housing 31 being inclined by 90 degrees, the TV viewing form in the control information display mode, and the TV viewing form in the phone communication mode.

Although the embodiments of the present invention have been described in detail referring to the drawings, it is to be understood that the specific structures are not limited to the foregoing embodiments, and design modifications within the scope and spirit of the present invention are also included in the present invention. For example, the types and arrangements of various operation keys on the operation unit may be freely selected, according to the function of the mobile phone.

### [INDUSTRIAL USABILITY]

The mobile phone according to the present invention is applicable to any communication system.

## Claims

1. A mobile phone capable of receiving TV broadcasting, including a first housing having a display unit on a front face thereof and a sub-display unit on a back face thereof, and a second housing having an operation unit on a surface thereof and coupled to said first housing via a biaxial hinge, wherein a TV viewing mode can be switched to a phone communication mode merely by a single manipulation of a user, upon receipt of an incoming call in said TV viewing mode.

2. The mobile phone according to claim 1, comprising a housing form detection unit that detects a mutual coupling posture of said first housing and said second housing, to thereby detect said single manipulation of said user based on a change of said mutual coupling posture of said first housing and said second housing detected by said housing form detection unit.

3. The mobile phone according to claim 2, wherein said single manipulation of said user includes changing said mutual coupling posture of said first housing and said second housing, upon receipt of an incoming call while viewing TV in a TV viewing form in which a TV image is displayed on said display unit with said mobile phone being folded such that said display unit on said first housing is oriented forward, from said TV viewing form to a phone communication form in which said mobile phone is opened such that said display unit on said first housing is oriented forward and said operation unit is exposed on said surface of said second housing, to thereby off-hook, thus enabling starting phone communication.

4. The mobile phone according to claim 2, wherein said single manipulation of said user includes changing said mutual coupling posture of said first housing and said second housing, upon receipt of an incoming call while viewing TV in a TV viewing form in which a TV image is displayed on said display unit with said first housing being inclined by 90 degrees with respect to said second housing, from a phone communication form in which said mobile phone is opened such that said display unit on said first housing is oriented forward and said operation unit is exposed on said surface of said second housing, from said TV viewing form to said phone communication form by rotating said first housing by 90 degrees with respect to said second housing, to thereby off-hook,thus enabling starting phone communication.

5. The mobile phone according to claim 2, wherein said single manipulation of said user includes changing said mutual coupling posture of said first housing and said second housing, upon receipt of an incoming call while viewing TV in a TV viewing form in which a TV image is displayed on said sub-display unit, with said mobile phone being opened such that said sub-display unit on said first housing is oriented forward and said operation unit is exposed on said surface of said second housing thus assuming a control information display form, from said TV viewing form to said phone communication form by rotating said first housing by 180 degrees with respect to said second housing, to thereby off-hook, thus enabling starting phone communication.

6. The mobile phone according to claim 1, wherein said single manipulation of said user includes pressing a call receipt key provided on said operation unit, to thereby off-hook,thus enabling starting phone communication, upon receipt of an incoming call while viewing TV, with a TV image being displayed on said display unit in a phone communication form in which said mobile phone is opened such that said display unit on said first housing is oriented forward and said operation unit is exposed on said surface of said second housing.

7. The mobile phone according to claim 1, said mobile phone being configured to accept connection of a headphone that outputs received sound and includes a microphone for inputting sound to be transmitted and a call receipt button that sets said mobile phone in a phone communication mode, comprising a detector that detects whether said headphone is connected, so as to allow, under a state that said headphone is detected to be connected, switching from said TV viewing mode to said phone communication mode only by a single manipulation of said user, upon receipt of an incoming call while viewing TV.

8. The mobile phone according to claim 7, wherein said single manipulation of said user includes pressing said call receipt button to thereby off-hook,thus enabling starting phone communication, upon receipt of an incoming call while viewing TV displaying a TV image on said display unit with said mobile phone being folded such that said display unit on said first housing is oriented forward.

9. The mobile phone according to claim 7, wherein said single manipulation of said user includes pressing said call receipt button or a call receipt key provided on said operation unit, to thereby off-hook,thus enabling starting phone communication, upon receipt of an incoming call while viewing TV displaying a TV image on said display unit with said first housing being inclined by 90 degrees with respect to said second housing, from a phone communication form in which said mobile phone is opened such that said display unit on said first housing is oriented forward and said operation unit is exposed on said surface of said second housing.

10. The mobile phone according to claim 7, wherein said single manipulation of said user includes pressing said call receipt button or a call receipt key provided on said operation unit, to thereby off-hook,thus enabling starting phone communication, upon receipt of an incoming call while viewing TV displaying a TV image on said sub-display unit in a control information display form in which said mobile phone is opened such that said sub-display unit on said first housing is oriented forward and said operation unit is exposed on said surface of said second housing.

11. The mobile phone according to claim 7, wherein said single manipulation of said user includes pressing said call receipt button or a call receipt key provided on said operation unit, to thereby off-hook,thus enabling starting phone communication, upon receipt of an incoming call while viewing TV displaying a TV image on said display unit in a phone communication form in which said mobile phone is opened such that said display unit on said first housing is oriented forward and said operation unit is exposed on said surface of said second housing.

12. The mobile phone according to claim 1, said mobile phone being configured to accept connection of a headphone that outputs received sound and includes a microphone for inputting sound to be transmitted and a call receipt button that sets said mobile phone in said phone communication mode, comprising a detector that detects whether said headphone is connected, so as to allow, under a state that said headphone is not detected to be connected, switching from said TV viewing mode to said phone communication mode only by a single manipulation of said user, upon receipt of an incoming call while viewing TV.
